# EUROPEAN PATENT APPLICATION

(11) **EP 1 013 329 A1**
(43) Date of publication of application: **28.06.2000**
(21) Application number: 99204431.3
(22) Date of filing: 20.12.1999
(51) Int. Cl.: B01D 50/00, B01D 47/06, B01D 46/10

(54) **Method for extraction of microparticles contained in oil mists**

(30) Priority: 22.12.1998 IT MI982772
(71) Applicant: Ambiente S.p.A, 20097 San Donato Milanese (IT)
(72) Inventor: Pettinelli, Claudio, 43036 FIDENZA, PARMA (IT); Zaffaroni, Carlo, 21052 BUSTO ARIZIO- SARONNO (IT); Greganti, Savio, 60017 MARZOCCA DI SENIGALLIA- ANCONA (IT)
(74) Representative: De Gregori, Antonella

(57) **Abstract**

Method for extraction of microparticles contained in oil mists, which consists of:
i) filtering the mist through a fibrous panel with a thickness of between 0.5 and 5 cm;
ii) washing simultaneously the mist, before it is filtered, and the filtering panel, by means of spraying with an aqueous detergent solution containing a non-ionic surfactant with a low foam-producing power, optionally mixed with an acid in order to maintain the pH of the solution at values of 7-8.

## Description

The present invention relates to a method for extraction of microparticles contained in oil mists.

More particularly, the present invention relates to a method for extraction of microparticles contained in oil mists obtained from industrial sludge drying plants.

In water treatment plants which are provided in industrial areas, the pollutant substances are concentrated into sludges, which, although they are of different types (chemical sludge, primary sludge and biological sludge), are mixed together and treated in a single disposal plant.

In general, at the end of the processing cycle, industrial sludge disposal plants have a thermal destruction step with energy recovery, since the concentration of chemical/organic substances, for example solvents, hydrocarbon residues, oil residues, pitch, organic residues etc., is such as to provide the sludge with calorific power of up to 5,000 Kcal/Kg. However, in order to implement this energy recovery, it is necessary to dry the sludges.

The drying stage includes a first step of concentration of the sludge, for example by means of strip-type presses, such as to reduce the dry content to a level of 20-25%, and a second treatment step at a high temperature. The latter is carried out in dedicated dryers, in which the residual water is also vaporised by means of hot air at a temperature of 250 - 270°C.

The flow of hot air mixed with the steam from the evaporated water is separated from the dried sludge, conveyed to a cooling tower, dehumidified, and then recycled to the dryer, after having been heated to the operative temperature once more in an exchanger.

However, this drying method has a disadvantage which is caused by the condensation of substances stripped from the organic vapours (greases contained in the biological sludges and oils of various kinds), which are drawn from the flow of air, and give rise to an oil mist, which, when the plant is in use, cause problems such as dirtying of moving mechanical parts, for example dirtying of the blades of the re-circulation fans, and formation of oily films along the walls of the pipes or on the tubes of the exchangers, where, as a result of the high temperature, they are degraded with formation of carbon residues, the thickness of which increases over a period of time, and which obstruct the flow of air, thus reducing the efficiency of the exchanger itself.

The applicant has invented a method for extraction of the oily microparticles contained in a current of air, which, when it is applied to the oil mists obtained from the industrial sludge drying plants, makes it possible to eliminate satisfactorily the problems of dirtying and encrustation, which reduce the efficiency of the plants dedicated to this service.

The subject of the present invention is thus a method for extraction of microparticles contained in oil mists, which consists of:
i) filtering the mist through a fibrous panel with a thickness of between 0.5 and 5 cm;
ii) washing simultaneously the mist, before it is filtered, and the filtering panel, by means of spraying with an aqueous detergent solution containing a non-ionic surfactant with a low foam-producing power, optionally mixed with an acid in order to maintain the pH of the solution at values of 7-8.

The washing (ii) is of particular importance in the present invention, since the filtering step alone would be sufficient to extract the microparticles from the oil mist. However, using filtering alone does not provide industrially advantageous results, since the rapid clogging of the filtering panel necessitates repeated stoppages so that the panel can be replaced. This fact would make an extraction system based on filtering alone impractical.

Unexpectedly, continuous, simultaneous washing both of the mist and of the filtering panel with detergent solution makes it possible to prevent rapid clogging of the filtering panel, thus prolonging the life of the latter.

According to the present invention, the fibrous panel for the filtering step has porosity which can retain micronic particles, and can be produced using fibres of any kind, provided that they are compatible with the oily substances to be filtered, and with the washing solution. In general, it is preferable to use commercially available filtering heater plugs, consisting of a hollow cylindrical structure in which the filtering panel is produced from glass fibres.

The detergent solution contains the non-ionic surfactant with a low foam-producing power in a quantity of between 5 and 15% by weight. Any non-ionic surf actant with a low foam-producing power can be used in the method which is the subject of the prevent invention, and, by way of example, use can be made of C₁₂ - C₁₅ ethoxypropoxylate (iso)alkyl alcohols.

If the aqueous solution which contains the non-ionic surfactant has an alkaline pH, it is possible to add an acid substance, for example based on phosphoric acid, in order to bring the pH to values of 7 - 8, so as to avoid negative effects on the filtering panel, if the latter is produced from glass fibres.

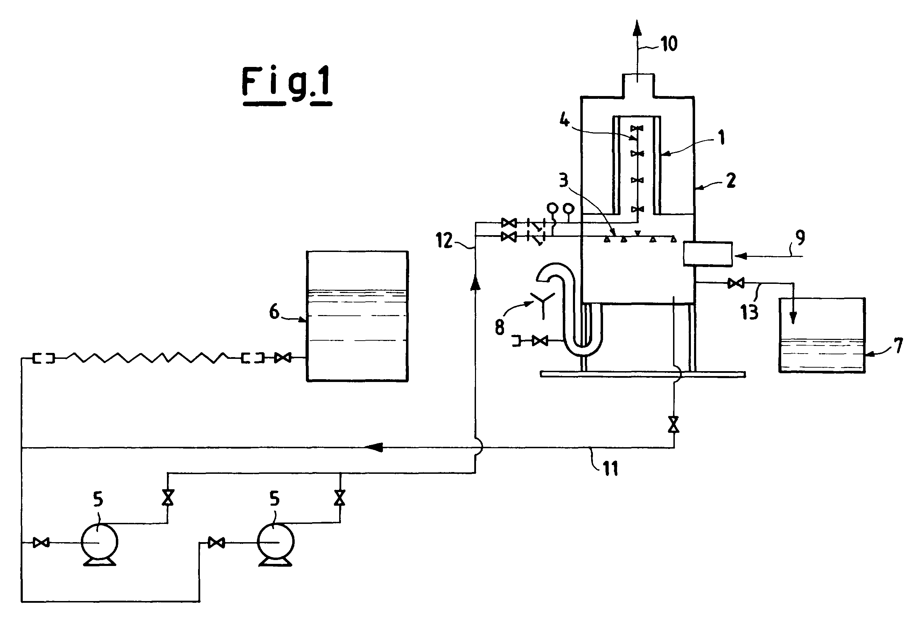

The method for extraction of microparticles contained in oil mists which is the subject of the present invention, will be better understood with reference to the attached drawing in figure 1, which represents by way of example a schematic, non-limiting embodiment.

With reference to figure 1, the present method for extraction of oil particles drawn from a flow of air can be implemented by means of a device which comprises a filtering plug 1, which is contained in a closed chamber 2; a first sprayer 3 outside the filtering plug; a second sprayer 4 inside the filtering plug; a pair of pumps 5 to supply the detergent solution to the sprayers; a tank 6 which contains the fresh detergent solution; a tank 7 to collect the used solution; and an emergency discharge unit 8.

The present method is thus apparent from the attached drawing and from the preceding description. The oil mist is supplied to the filtering plug by means of the line 9. Before being filtered, the mist is subjected to a first washing by the sprayer 3, and then flows through the filter, which is washed continuously by the second sprayer 4. The filtered air, which is substantially free from oily particles, leaves the closed chamber 2 through the discharge unit 10, whereas the detergent solution collects at the base of the chamber 2 itself, from where it is recuperated by means of the pumps 5, and recycled to the sprayers by means of the lines 11 and 12. Periodically, the exhausted detergent solution is discharged via the line 13, and collected in the tank 7.

The fresh solution is always collected by the pumps 5 from the tank 6.

The present method, using the diagram in figure 1, was used to filter a flow of air of approximately 10,000 m³/h. For the filtering, a KOCH FLEXIFIBER IC filtering plug was used, and for the washing, a detergent solution was used, consisting of 500 l of water containing 75 l of LIMEX and 25 l of ADIX, both of which are non-ionic detergents with a low foam-producing power, made by the company AEB S.p.A.

The detergent solution was supplied to the sprayers with an overall flow rate of 3 m³/h, separating a mix of condensates equivalent to approximately 200 l/day.

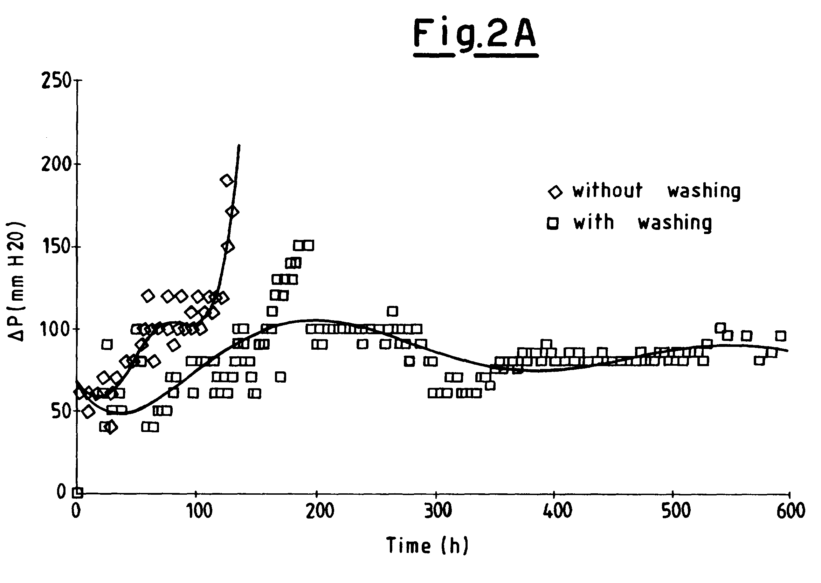

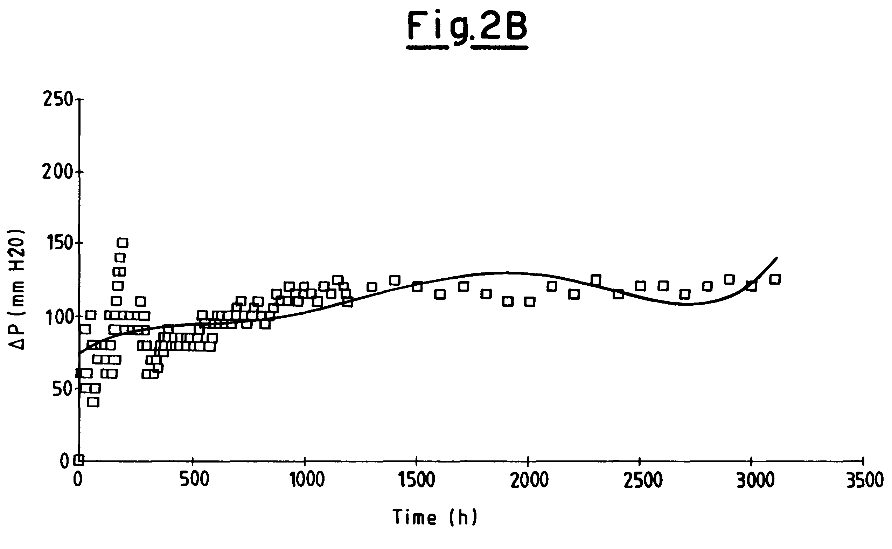

The attached figures 2, 2A and 2B show the results of two tests carried out respectively for 600 and 3,000 hours. The graphs show the development of the load losses, expressed in mmH₂0, measured on the filtering plug, used without washing and with washing.

## Claims

1. Method for extraction of microparticles contained in oil mists, which consists of:
i) filtering the mist through a fibrous panel with a thickness of between 0.5 and 5 cm;
ii) washing simultaneously the mist, before it is filtered, and the filtering panel, by means of spraying with an aqueous detergent solution containing a non-ionic surfactant with a low foam-producing power, optionally mixed with an acid in order to maintain the pH of the solution at values of 7-8.
